# EUROPEAN PATENT APPLICATION

(11) **EP 4 572 194 A1**
(43) Date of publication of application: **18.06.2025**
(21) Application number: 22954665.0
(22) Date of filing: 12.08.2022
(51) Int. Cl.: H04L 1/16

(54) **HARQ FEEDBACK METHOD AND APPARATUS**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2022/112316
(87) International publication number: WO 2024/031715

(57) **Abstract**

Disclosed in embodiments of the present invention are an HARQ feedback method and apparatus, capable of being applied to systems such as the Internet of vehicles, V2X, and V2V. The method comprises: receiving a scheduling instruction sent by a network device, the scheduling instruction being used for scheduling multiple transport blocks; and in response to the multiple transport blocks comprising a first transport block which enables HARQ feedback and a second transport block which does not enable HARQ feedback, sending at least one HARQ feedback to the network device, wherein the at least one HARQ feedback comprises HARQ corresponding to the first transport block. By implementing the embodiments of the present invention, the network device can wait for HARQ feedback for the second transport block, and can also perform subsequent transmission without waiting for the HARQ feedback for the second transport block. By such a method, a network device can perform subsequent transmission without waiting for HARQ feedback corresponding to all the transport blocks among multiple transport blocks to be received, so that the transmission delay caused by waiting for the HARQ feedback is reduced to a certain extent.

## Description

### TECHNICAL FIELD

The disclosure relates to the field of communication technologies, and in particular, to a HARQ feedback method and device.

### BACKGROUND

In the research of wireless communication technology, satellite communication is considered an important aspect of the future development of wireless communication technology. Satellite communication refers to the communication conducted by wireless communication equipment on the ground using satellites as relays. However, due to the long signal transmission distance in satellite communication scenarios, there is a large delay in data transmission. This large delay may lead to hybrid automatic repeat request (HARQ) delay issues, where the network device needs to wait for the terminal device to return HARQ feedback for downlink transmission before proceeding with subsequent downlink transmission. However, due to this large delay, the network device has a longer waiting time, which hinders subsequent downlink transmission.

In order to solve the problem of HARQ delay, in the related art, if a network device schedules a transport block through a scheduling instruction, the terminal device can determine whether to send HARQ feedback based on whether the HARQ process of the transport block is in a disabled state. Correspondingly, for the network device, since the HARQ process of the transport block can be in the disabled state, it can at least avoid waiting for HARQ feedback in the disabled state. However, there is still a lack of clear HARQ feedback methods in the related art for a case that the scheduling instruction schedules a plurality of transport blocks.

### SUMMARY

Embodiments of the present disclosure provide a HARQ feedback method and device, which can be applied to both terrestrial and non-terrestrial networks, in which the non-terrestrial networks include satellite based Internet of Things (IoT), such as Narrowband Internet of Things (NB -IoT); Internet of Vehicles, such as vehicle to everything (V2X) communication, long term evolution -vehicle (LTE-V), vehicle to vehicle (V2V) communication, etc., or can be applied in fields such as intelligent driving and intelligent connected vehicle, and is configured to solve the problem of HARQ feedback for a case that a scheduling instruction of a network device schedules a plurality of transport blocks.

In a first aspect, embodiments of the present disclosure provide a HARQ feedback method. The method is performed by a terminal device, and includes:
receiving a scheduling instruction sent by a network device, in which the scheduling instruction is configured to schedule a plurality of transport blocks;
in response to the plurality of transport blocks including a first transport block with HARQ feedback enabled and a second transport block with HARQ feedback disabled, sending at least one HARQ feedback to the network device,
in which the at least one HARQ feedback includes HARQ feedback corresponding to the first transport block.

In this technical solution, after receiving information carried by the plurality of transport blocks scheduled by the same scheduling instruction, the terminal device can send corresponding HARQ feedback to the network device only for the first transport blocks with HARQ feedback enabled among the plurality of transport blocks. In this way, the network device can avoid waiting to receive HARQ feedback corresponding to all transport blocks in the plurality of transport blocks before proceeding with subsequent transmissions, which is beneficial for reducing the transmission delay caused by waiting for HARQ feedback to a certain extent.

In an implementation, the at least one HARQ feedback further includes:
HARQ feedback corresponding to the second transport block.

In an implementation, HARQ information contained in the HARQ feedback corresponding to the second transport block is one of:
HARQ information configured to determine whether information carried by the second transport block is successfully received;
HARQ information with a set value.

In this technical solution, after receiving information carried by the plurality of transport blocks scheduled by the same scheduling instruction, the terminal device can send corresponding HARQ feedback to the network device for the first transport block with HARQ feedback enabled among the plurality of transport blocks. The network device can wait for HARQ feedback for the second transport block, or can proceed with subsequent transmissions without waiting for HARQ feedback for the second transport block. In this way, the network device can avoid waiting for all HARQ feedback corresponding to a plurality of transport blocks to be received before proceeding with subsequent transmission, which is beneficial for reducing the transmission delay caused by waiting for HARQ feedback to a certain extent.

In an implementation, the method further includes:
receiving indication information sent by the network device;
in which the indication information is configured to determine whether the at least one transport block in the plurality of transport blocks is the first transport block or the second transport block.

In an implementation, the method further includes:
determining the at least one transport block in the plurality of transport blocks as the first transport block or the second transport block based on configuration information specified in a protocol.

In an implementation, the method further includes:
in response to the plurality of transport blocks only including second transport blocks with HARQ feedback disabled, not sending HARQ feedback corresponding to any of the second transport blocks to the network device.

In this technical solution, after receiving information carried by the plurality of transport blocks scheduled by the same scheduling instruction, if only the second transport blocks with HARQ feedback disabled are included in the plurality of transport blocks, the terminal device will not send any HARQ feedback corresponding to any of the second transport blocks to the network device. Correspondingly, the network device can proceed with subsequent transmission without waiting for the HARQ feedback corresponding to all transport blocks in the plurality of transport blocks to be received. In this way, the network device can avoid waiting for all HARQ feedback corresponding to the plurality of transport blocks to be received before proceeding with subsequent transmission, which is beneficial for reducing the transmission delay caused by waiting for HARQ feedback to a certain extent.

In an implementation, the method further includes:
in response to the plurality of transport blocks only including first transport blocks with HARQ feedback enabled, sending HARQ feedback corresponding to at least one of the first transport blocks to the network device.

In this technical solution, after receiving information carried by the plurality of transport blocks scheduled by the same scheduling instruction, if only the first transport blocks with HARQ feedback enabled are included in the plurality of transport blocks, the terminal device sends at least one HARQ feedback corresponding to the first transport block to the network device. Correspondingly, after receiving HARQ feedback corresponding to the at least one transport block in the plurality of transport blocks, the network device can proceed with subsequent transmissions. In this way, it is possible to avoid the network device having to wait for all HARQ feedback corresponding to the plurality of transport blocks to be received before proceeding with subsequent transmissions, which is beneficial for reducing the transmission delay caused by waiting for HARQ feedback to a certain extent.

In a second aspect, embodiments of the present disclosure provide another HARQ feedback method. The method is performed by a terminal device, and includes:
sending a scheduling instruction to a terminal device, in which the scheduling instruction is configured to schedule a plurality of transport blocks;
in response to the plurality of transport blocks including a first transport block with HARQ feedback enabled and a second transport block with HARQ feedback disabled, waiting to receive at least one HARQ feedback sent by the terminal device,
in which the at least one HARQ feedback includes HARQ feedback corresponding to the first transport block.

In this technical solution, after sending the information carried by the plurality of transport blocks scheduled by the scheduling instruction to the terminal device, the network device can only wait to receive the corresponding HARQ feedback sent by the terminal device, for only the first transport blocks with HARQ feedback enabled among the plurality of transport blocks. In this way, the network device can avoid waiting for all HARQ feedback corresponding to a plurality of transport blocks to be received before proceeding with subsequent transmissions, which is beneficial for reducing the transmission delay caused by waiting for HARQ feedback to a certain extent.

In an implementation, the at least one HARQ feedback further includes:
HARQ feedback corresponding to the second transport block.

In an implementation, HARQ information contained in the HARQ feedback corresponding to the second transport block is one of:
HARQ information configured to determine whether information carried by the second transport block is successfully received;
HARQ information with a set value.

In this technical solution, the network device can wait to receive the corresponding HARQ feedback sent by the terminal device, for only the first transport blocks with HARQ feedback enabled among the plurality of transport blocks after sending the information carried by the plurality of transport blocks scheduled by the scheduling instruction to the terminal device. The network device can wait for HARQ feedback for the second transport block, or can proceed with subsequent transmissions without waiting for HARQ feedback for the second transport block. In this way, the network device can avoid waiting for all HARQ feedback corresponding to the plurality of transport blocks to be received before proceeding with subsequent transmissions, which is beneficial for reducing the transmission delay caused by waiting for HARQ feedback to a certain extent.

In an implementation, the method may further include:
sending indication information sent to the terminal device;
in which the indication information is configured to determine whether the at least one transport block in the plurality of transport blocks is the first transport block or the second transport block.

In an implementation, the method may further include:
in response to the plurality of transport blocks only including second transport blocks with HARQ feedback disabled, not waiting to receive HARQ feedback corresponding to any of the second transport blocks sent by the terminal device.

In this technical solution, after sending the information carried by the plurality transport blocks scheduled by the scheduling instruction to the terminal device, if only the second transport blocks with HARQ feedback disabled are included in the plurality of transport blocks, the network device does not need to wait for the HARQ feedback corresponding to any second transport block sent by the terminal device. That is to say, the network device does not need to wait for the HARQ feedback corresponding to all transport blocks in the plurality of transport blocks to be received before proceeding with subsequent transmissions. In this way, the network device can avoid waiting for all HARQ feedback corresponding to the plurality of transport blocks to be received before proceeding with subsequent transmissions, which is beneficial for reducing the transmission delay caused by waiting for HARQ feedback to a certain extent.

In an implementation, the method may further include:
in response to the plurality of transport blocks only including first transport blocks with HARQ feedback enabled, waiting to receive HARQ feedback corresponding to at least one of the first transport blocks sent by the terminal device.

In this technical solution, after sending the information carried by the plurality of transport blocks scheduled by the scheduling instruction to the terminal device, if only the first transport blocks with HARQ feedback enabled are included in the plurality of transport blocks, the network device wait to receive the HARQ feedback corresponding to at least one of the first transport blocks sent by the terminal device. That is to say, after receiving HARQ feedback corresponding to the at least one transport block in the plurality of transport blocks, the network device can proceed with subsequent transmissions. In this way, it is possible to avoid the network device having to wait for all HARQ feedback corresponding to the plurality of transport blocks to be received before proceeding with subsequent transmissions, which is beneficial for reducing the transmission delay caused by waiting for HARQ feedback to a certain extent.

In a third aspect, embodiments of the present disclosure provide a HARQ feedback apparatus. The HARQ feedback apparatus includes:
a first receiving module, configured to receive a scheduling instruction sent by a network device, in which the scheduling instruction is configured to schedule a plurality of transport blocks;
a first sending module, configured to send at least one HARQ feedback to the network device, in response to the plurality of transport blocks including a first transport block with HARQ feedback enabled and a second transport block with HARQ feedback disabled,
in which the at least one HARQ feedback includes HARQ feedback corresponding to the first transport block.

In an implementation, the at least one HARQ feedback further includes:
HARQ feedback corresponding to the second transport block.

In an implementation, HARQ information contained in the HARQ feedback corresponding to the second transport block is one of:
HARQ information configured to determine whether information carried by the second transport block is successfully received;
HARQ information with a set value.

In an implementation, the device further includes:
a second receiving module, configured to receive indication information sent by the network device;
in which the indication information is configured to determine whether the at least one transport block in the plurality of transport blocks is the first transport block or the second transport block.

In an implementation, the device further includes:
a determining module, configured to determine the at least one transport block in the plurality of transport blocks as the first transport block or the second transport block based on configuration information specified in a protocol.

In an implementation, the device further includes:
a first processing module, configured to not send HARQ feedback corresponding to any of the second transport blocks to the network device, in response to the plurality of transport blocks only including second transport blocks with HARQ feedback disabled.

In an implementation, the device further includes:
a second sending module, configured to send HARQ feedback corresponding to at least one of the first transport blocks to the network device, in response to the plurality of transport blocks only including first transport blocks with HARQ feedback enabled.

In a fourth aspect, embodiments of the present disclosure provide another HARQ feedback apparatus. The HARQ feedback apparatus includes:
a third sending module, configured to send a scheduling instruction to a terminal device, in which the scheduling instruction is configured to schedule a plurality of transport blocks;
a third receiving module, configured to wait to receive at least one HARQ feedback sent by the terminal device, in response to the plurality of transport blocks including a first transport block with HARQ feedback enabled and a second transport block with HARQ feedback disabled,
in which the at least one HARQ feedback includes HARQ feedback corresponding to the first transport block.

In an implementation, the at least one HARQ feedback further includes:
HARQ feedback corresponding to the second transport block.

In an implementation, HARQ information contained in the HARQ feedback corresponding to the second transport block is one of:
HARQ information configured to determine whether information carried by the second transport block is successfully received;
HARQ information with a set value.

In an implementation, the device further includes:
a fourth sending module, configured to send indication information to the terminal device;
in which the indication information is configured to determine whether the at least one transport block in the plurality of transport blocks is the first transport block or the second transport block.

In an implementation, the device further includes:
a second processing module, configured to not wait to receive HARQ feedback corresponding to any of the second transport blocks sent by the terminal device, in response to the plurality of transport blocks only including second transport blocks with HARQ feedback disabled.

In an implementation, the device further includes:
a third processing module, configured to wait to receive HARQ feedback corresponding to at least one of the first transport blocks sent by the terminal device, in response to the plurality of transport blocks only including first transport blocks with HARQ feedback enabled.

In a fifth aspect, embodiments of the present disclosure provide a communication device. The communication device includes a processor, which when calling a computer program stored in a memory, implements the method described in the first aspect.

In a sixth aspect, embodiments of the present disclosure provide a communication device. The communication device includes a processor, which when calling a computer program stored in a memory, implements the method described in the second aspect.

In a seventh aspect, embodiments of the present disclosure provide a communication device. The communication device includes a processor and a memory. The memory is stored with a computer program. The processor is configured to execute the computer program stored in the memory, so as to cause the communication device to implement the method described in the first aspect.

In an eighth aspect, embodiments of the present disclosure provide a communication device. The communication device includes a processor and a memory. The memory is stored with a computer program. The processor is configured to execute the computer program stored in the memory, so as to cause the communication device to implement the method described in the second aspect.

In a ninth aspect, embodiments of the present disclosure provide a communication device, including a processor and an interface circuit; in which the interface circuit is configured to receive code instructions and transmit the code instructions to the processor; and the processor is configured to run the code instructions, to cause the device to implement the method described in the first aspect.

In a tenth aspect, embodiments of the present disclosure provide a communication device, including a processor and an interface circuit; in which the interface circuit is configured to receive code instructions and transmit the code instructions to the processor; and the processor is configured to run the code instructions, to cause the device to implement the method described in the second aspect.

In an eleventh aspect, embodiments of the present disclosure provide a HARQ feedback system. The system includes the HARQ feedback apparatus described in the third aspect and the HARQ feedback apparatus described in the fourth aspect, or the system includes the communication device described in the fifth aspect and the communication device described in the sixth aspect, or the system includes the communication device described in the seventh aspect and the communication device described in the eighth aspect, or the system includes the communication device described in the ninth aspect and the communication device described in the tenth aspect.

In a twelfth aspect, embodiments of the present disclosure provide a computer readable storage medium, configured to store instructions used by the above terminal device, which when executed, cause the terminal device to implement the method described in the first aspect.

In a thirteenth aspect, embodiments of the present disclosure provide a computer readable storage medium, configured to store instructions used by the above network device, which when executed, cause the network device to implement the method described in the second aspect.

In a fourteenth aspect, the present disclosure further provides a computer program product including a computer program that, when run on a computer, causes the computer to perform the method described in the first aspect above.

In a fifteenth aspect, the present disclosure further provides a computer program product including a computer program that, when run on a computer, causes the computer to perform the method described in the second aspect above.

In a sixteenth aspect, the present disclosure provides a chip system including at least one processor and interface for supporting the terminal device to implement the functions involved in the first aspect, such as determining or processing at least one of the data and information involved in the above method. In one possible design, the chip system further includes a memory for storing necessary computer programs and data for the terminal device. This chip system can be composed of chips or include chips and other discrete components.

In a seventeenth aspect, the present disclosure provides a chip system including at least one processor and interface for supporting the terminal device to implement the functions involved in the second aspect, such as determining or processing at least one of the data and information involved in the above method. In one possible design, the chip system further includes a memory for storing necessary computer programs and data for the terminal device. This chip system can be composed of chips or include chips and other discrete components.

In an eighteenth aspect, the present disclosure provides a computer program that, when run on a computer, causes the computer to perform the method described in the first aspect.

In a nineteenth aspect, the present disclosure provides a computer program that, when run on a computer, causes the computer to perform the method described in the second aspect.

### BRIEF DESCRIPTION OF THE DRAWINGS

In order to provide a clearer explanation of the technical solution in embodiments of the present disclosure or background, the accompanying drawings required for use in embodiments of the present disclosure or background will be described below.
Fig. 1 is a schematic diagram of an architecture of a communication system provided in an embodiment of the present disclosure.
Fig. 2 is a schematic flowchart of a HARQ feedback method provided in an embodiment of the present disclosure.
Fig. 3 is a schematic diagram of HARQ feedback in a scenario provided in an embodiment of the present disclosure.
Fig. 4 is a schematic flowchart of interaction of another HARQ feedback method provided in an embodiment of the present disclosure.
Fig. 5 is a schematic diagram of HARQ feedback in another scenario provided in an embodiment of the present disclosure.
Fig. 6 is a schematic flowchart of another HARQ feedback method provided in an embodiment of the present disclosure.
Fig. 7 is a schematic diagram of HARQ feedback in another scenario provided in an embodiment of the present disclosure.
Fig. 8 is a schematic flowchart of another HARQ feedback method provided in an embodiment of the present disclosure.
Fig. 9 is a schematic diagram of HARQ feedback in another scenario provided in an embodiment of the present disclosure.
Fig. 10 is a schematic flowchart of another HARQ feedback method provided in an embodiment of the present disclosure.
Fig. 11 is a schematic flowchart of another HARQ feedback method provided in an embodiment of the present disclosure.
Fig. 12 is a schematic flowchart of another HARQ feedback method provided in an embodiment of the present disclosure.
Fig. 13 is a schematic flowchart of another HARQ feedback method provided in an embodiment of the present disclosure.
Fig. 14 is a schematic flowchart of another HARQ feedback method provided in an embodiment of the present disclosure.
Fig. 15 is a schematic flowchart of another HARQ feedback method provided in an embodiment of the present disclosure.
Fig. 16 is a schematic flowchart of another HARQ feedback method provided in an embodiment of the present disclosure.
Fig. 17 is a block diagram of a HARQ feedback apparatus provided in an embodiment of the present disclosure.
Fig. 18 is a block diagram of another HARQ feedback apparatus provided in an embodiment of the present disclosure.
Fig. 19 is a block diagram of a HARQ feedback device 1900 provided in an embodiment of the present disclosure.
Fig. 20 is a block diagram of a chip provided in an embodiment of the present disclosure.

### DETAILED DESCRIPTION

For ease of understanding, the terms involved in this disclosure are first introduced.

### 1. Downlink Control Information (DCI)

DCI is carried by the physical downlink control channel (PDCCH) and can include uplink and downlink resource allocation, HARQ feedback, power control, etc. PDCCH is a physical channel configured to carry downlink control information.

### 2. HARQ feedback

The HARQ protocol is one of the most important features in cellular communication systems. The feedback information of HARQ feedback can be HARQ acknowledge (ACK) feedback or HARQ negative acknowledgement (NACK) feedback. Using the HARQ protocol, a network device needs to wait for feedback from a terminal device before sending new data. In the case of NACK, the network device may need to resend data packets. Otherwise, the network device can send new data. This stopping and waiting process introduces inherent latency to communication protocols, which may reduce link throughput.

In order to solve the problem of HARQ delay, in the related art, if a network device schedules a transport block through a scheduling instruction, the terminal device can determine whether to send HARQ feedback based on whether the HARQ process of the transport block is in an disabled state. Correspondingly, for the network device, since the HARQ process of the transport block may be in the disabled state, it can at least avoid waiting for HARQ feedback in the disabled state. However, there is still a lack of clear HARQ feedback methods in the related art for a case that the scheduling instruction schedules a plurality of transport blocks.

In order to better understand the HARQ feedback method disclosed in embodiments of the present disclosure, the following first describes the communication system to which the embodiments are applicable.

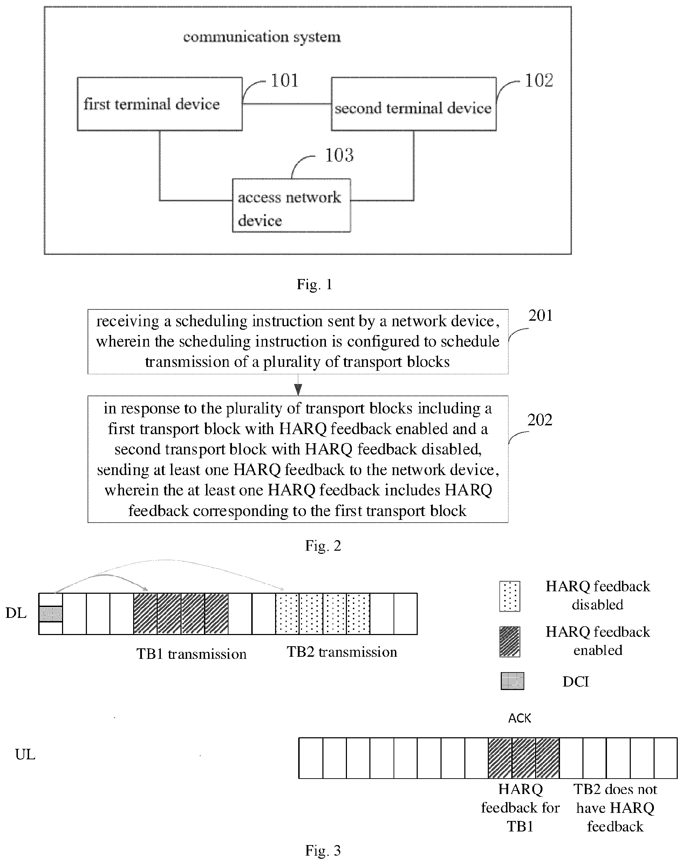

Please refer to Fig. 1, which is a schematic diagram of an architecture of a communication system provided in an embodiment of the present disclosure. The communication system may include, but is not limited to, one network device and one terminal device. The number and form of devices shown in Fig. 1 are for example only and do not constitute a limitation on the embodiments of the present disclosure. In practical applications, it may include two or more network devices and two or more terminal devices. The communication system shown in Fig. 1 takes the example of including one network device 101 and one terminal device 102.

It should be noted that the technical solution disclosed in the embodiments of the present disclosure can be applied to various communication systems, for example, Long Term Evolution (LTE) systems, 5th generation (5G) mobile communication systems, 5G new radio (NR) systems, or other future new mobile communication systems.

The network device 101 in embodiments of the present disclosure is an entity on the network side used for transmitting or receiving signals. For example, the network device 101 can be an evolved NodeB (eNB), a transmission reception point (TRP), a next generation NodeB (gNB) in an NR system, a base station in other future mobile communication systems, or an access node in a wireless fidelity (WiFi) system. The specific technology and device form adopted by the network device are not limited in the embodiments of the present disclosure. The network device provided in embodiments of the present disclosure may be composed of a central unit (CU) and a distributed unit (DU), where the CU may also be referred to as a control unit. The CU-DU structure can be configured to separate the protocol layers of the network device, such as the base station, with some protocol layer functions centrally controlled by the CU and the remaining or all protocol layer functions distributed in the DU, which is centrally controlled by the CU.

The terminal device 102 in embodiments of the present disclosure is an entity on the user side used for receiving or transmitting signals, such as a mobile phone. The terminal device can also be referred to as a terminal, user equipment (UE), mobile station (MS), mobile terminal device (MT), etc. The terminal device can be a communication enabled car, smart car, mobile phone, wearable device, tablet, computer with wireless transmission and reception capabilities, virtual reality (VR) terminal device, augmented reality (AR) terminal device, wireless terminal device in industrial control, wireless terminal device in autonomous driving, wireless terminal device in remote medical surgery, wireless terminal device in smart grids, wireless terminal device in transportation safety, wireless terminal device in smart city, and wireless terminal device in smart home, etc. The specific technology and device form adopted by the terminal device are not limited in the embodiments of the present disclosure.

It can be understood that the communication system described in embodiments of the present disclosure is intended to provide a clearer explanation of the technical solution of this disclosure, and does not constitute a limitation on the technical solution provided in this disclosure. Those of ordinary skill in the art will know that with the evolution of system architecture and the emergence of new business scenarios, the technical solution provided in this disclosure is also applicable to similar technical problems.

In order to clearly illustrate the HARQ feedback method of the terminal device in the aforementioned communication system when a plurality of transport blocks are scheduled based on the scheduling instruction of the network device, the HARQ feedback method and device provided in this disclosure will be described in detail below with reference to the accompanying drawings.

Please refer to Fig. 2, which is a schematic flowchart of a HARQ feedback method provided in an embodiment of the present disclosure. As shown in Fig. 2, the method is performed by a terminal device and may include, but is not limited to, the following steps.

At step 201, a scheduling instruction sent by a network device is received, in which the scheduling instruction is configured to schedule a plurality of transport blocks.

In all embodiments of the present disclosure, the plurality of transport blocks are scheduled using the same scheduling instruction.

The network device schedules the transmission of a plurality of transport blocks through the scheduling instruction, so that the terminal device can receive information carried by the plurality of transport blocks on the plurality of transmission resources scheduled by the scheduling instruction. After receiving the information carried by the plurality of transport blocks, the terminal device can determine whether HARQ feedback is needed for these a plurality of transport blocks and/or determine the HARQ information for HARQ feedback. In embodiments of the present disclosure, a plurality of refers to two or more.

For example, for the NB-IoT terminal device, the network device can schedule unicast transport blocks for a plurality of narrowband physical downlink shared channels (NPDSCH) through the narrowband physical downlink control channel (NPDCCH). In the example of scheduling unicast transport blocks for two NPDSCH channels by the network device, the scheduled transport blocks can be referred to as TB (Transport Block) 1 and TB2. The terminal device receives the information carried by the transport blocks TB1 and TB2 on the transmission resources of the transport blocks TB1 and TB2 scheduled by the scheduling instruction. After receiving the information carried by the transport blocks TB1 and TB2, the terminal device determines whether to send corresponding HARQ feedback for TB1 and TB2 respectively. The specific steps for HARQ feedback will be described in the subsequent steps, and will not be elaborated in this step.

It should be noted that the network device can send the scheduling instruction based on a DCI signaling, or send the scheduling instruction based on a high-layer signaling such as Radio Resource Control (RRC), or send the scheduling instruction based on a physical layer signaling such as Mobile edge computing (MEC) user network edge device (Customer Edge, CE), which is not limited in this embodiment.

At step 202, in response to the plurality of transport blocks including a first transport block with HARQ feedback enabled and a second transport block with HARQ feedback disabled, at least one HARQ feedback is sent to the network device, in which the at least one HARQ feedback includes HARQ feedback corresponding to the first transport block.

The network device transmits information through the first transport block and the second transport block. After the terminal device receives the information carried by the network device through the first and second transport blocks, it decodes the information carried by the first and second transport blocks respectively to determine whether the information carried by the first and second transport blocks has been correctly received.

For the first transport block, if the terminal device correctly receives the information carried by the first transport block, HARQ information of the HARQ feedback corresponding to the first transport block is ACK; if the terminal device does not correctly receive the information carried by the first transport block, HARQ information of the HARQ feedback corresponding to the first transport block is NACK. Correspondingly, the network device determines whether the terminal device has correctly received the information carried by the first transport block based on whether the HARQ information of the HARQ feedback corresponding to the first transport block sent by the terminal device is ACK or NACK.

For the second transport block, as it is a second transport block with HARQ feedback disabled, regardless of whether the terminal device correctly receives the information carried by the second transport block, the terminal device does not need to send HARQ feedback corresponding to the second transport block to the network device. That is, in step 202, in response to a plurality of transport blocks including a first transport block with HARQ feedback enabled and a second transport block with HARQ feedback disabled, at least one HARQ feedback is sent to the network device, in which the at least one HARQ feedback includes the HARQ feedback corresponding to the first transport block and does not include the HARQ feedback corresponding to the second transport block.

As shown in Fig. 3, the schematic diagram depicts the terminal device receiving TB1 transmission and TB2 transmission based on the downlink channel (DL) when two transport blocks are scheduled with the same scheduling instruction. The transport block TB1 used for TB1 transmission is the first transport block with HARQ feedback enabled, and the transport block TB2 used for TB2 transmission is the second transport block with HARQ feedback disabled. As shown in Fig. 3, the terminal device can transmit HARQ feedback for the transport block TB1 in the uplink channel (UL), but not transmit HARQ feedback for the transport block TB2. Correspondingly, after transmitting TB1 and TB2 on the downlink channel, the network device only needs to wait to receive HARQ feedback from the terminal device for transport block TB1, but does not need to wait for HARQ feedback for transport block TB2, in order to proceed with subsequent transmissions, thereby reducing the transmission delay caused by waiting to a certain extent.

By implementing this embodiment of the present disclosure, after receiving information carried by a plurality of transport blocks scheduled by the same scheduling instruction, the terminal device can send only corresponding HARQ feedback for the first transport blocks with HARQ feedback enabled, in the plurality of transport blocks, to the network device. In this way, the network device can avoid waiting for all HARQ feedback corresponding to a plurality of transport blocks to be received before proceeding with subsequent transmissions, which is beneficial for reducing the transmission delay caused by waiting for HARQ feedback to a certain extent.

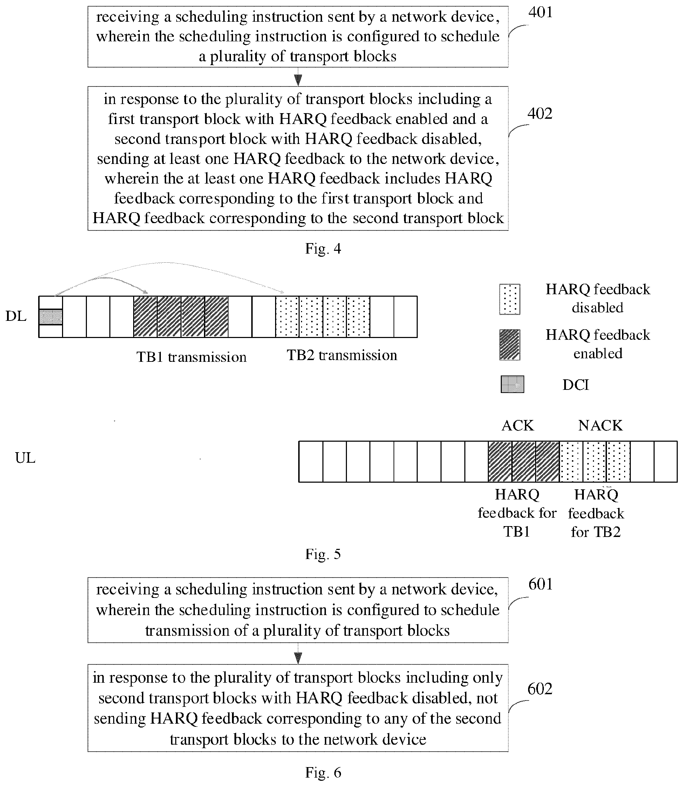

Please refer to Fig. 4, which is a schematic flowchart of another HARQ feedback method provided in an embodiment of the present disclosure. As shown in Fig. 4, the method is performed by a terminal device, and the method may include, but is not limited to, the following steps.

At step 401, a scheduling instruction sent by a network device is received, in which the scheduling instruction is configured to schedule transmission of a plurality of transport blocks.

Please refer to the relevant descriptions in the previous embodiments, which will not be repeated in this embodiment.

At step 402, in response to the plurality of transport blocks including a first transport block with HARQ feedback enabled and a second transport block with HARQ feedback disabled, at least one HARQ feedback is sent to the network device, in which the at least one HARQ feedback includes HARQ feedback corresponding to the first transport block and HARQ feedback corresponding to the second transport block.

The network device transmits information through the first transport block and the second transport block. After the terminal device receives the information carried by the network device through the first and second transport blocks, it decodes the information carried by the first and second transport blocks respectively to determine whether the information carried by the first and second transport blocks has been correctly received.

For the first transport block, if the terminal device correctly receives the information carried by the first transport block, HARQ information of the HARQ feedback corresponding to the first transport block is ACK; if the terminal device does not correctly receive the information carried by the first transport block, HARQ information of the HARQ feedback corresponding to the first transport block is NACK. Correspondingly, the network device determines whether the terminal device has correctly received the information carried by the first transport block based on whether the HARQ information of the HARQ feedback corresponding to the first transport block sent by the terminal device is ACK or NACK.

For the second transport block, as the first possible implementation, the HARQ feedback corresponding to the second transport block contains HARQ information configured to determine whether the information carried by the second transport block has been successfully received. If the terminal device correctly receives the information carried by the second transport block, the HARQ feedback corresponding to the second transport block contains HARQ information as ACK; if the terminal device does not correctly receive the information carried by the second transport block, the HARQ feedback corresponding to the second transport block contains HARQ information as NACK. Correspondingly, the network device determines whether the terminal device has correctly received the information carried by the second transport block based on whether the HARQ information of the HARQ feedback corresponding to the second transport block sent by the terminal device is ACK or NACK. The network device can wait for HARQ feedback for the second transport block, or can proceed with subsequent transmission without waiting for HARQ feedback for the second transport block, thereby reducing the transmission delay caused by waiting to a certain extent.

For the second transport block, as the second possible implementation, the HARQ information in the HARQ feedback corresponding to the second transport block is the default value. That is to say, regardless of whether the terminal device correctly receives the information carried by the second transport block, the HARQ feedback corresponding to the second transport block contains the same default value of HARQ information, which can be exemplified by ACK or NACK. Correspondingly, the network device cannot determine whether the terminal device has correctly received the information carried by the second transport block based on the HARQ information of the HARQ feedback corresponding to the second transport block sent by the terminal device. Therefore, the network device can proceed with subsequent transmissions without waiting for HARQ feedback for the second transport block, thereby reducing the transmission delay caused by waiting to a certain extent.

As shown in Fig. 5, the schematic diagram depicts the terminal device receiving TB1 transmission and TB2 transmission based on the downlink channel (DL) when two transport blocks are scheduled with the same scheduling instruction. The transport block TB1 used for TB1 transmission is the first transport block with HARQ feedback enabled, and the transport block TB2 used for TB2 transmission is the second transport block with HARQ feedback disabled. As shown in Fig. 5, the terminal device can transmit HARQ feedback for transport block TB1 and HARQ feedback for transport block TB2 in the uplink channel (UL). Correspondingly, the network device needs to wait to receive HARQ feedback for the transport block TB1 sent by the terminal device after transmitting TB1 and TB2 based on the downlink channel. After receiving the HARQ feedback for transport block TB1, the network device can wait for the HARQ feedback for transport block TB2, or can proceed with subsequent transmission without waiting for the HARQ feedback for transport block TB2, thereby reducing the transmission delay caused by waiting to a certain extent.

By implementing this embodiment of the present disclosure, after receiving information carried by a plurality of transport blocks scheduled by the same scheduling instruction, the terminal device can send corresponding HARQ feedback for the first transport block with HARQ feedback enabled in the plurality of transport blocks to the network device. The network device can wait for HARQ feedback for the second transport block, or can proceed with subsequent transmissions without waiting for HARQ feedback for the second transport block. In this way, the network device can avoid waiting for all HARQ feedback corresponding to a plurality of transport blocks to be received before proceeding with subsequent transmissions, which is beneficial for reducing the transmission delay caused by waiting for HARQ feedback to a certain extent.

Please refer to Fig. 6, which is a schematic flowchart of another HARQ feedback method provided in an embodiment of the present disclosure. As shown in Fig. 6, the method is performed by a terminal device, and the method may include, but is not limited to, the following steps.

At step 601, a scheduling instruction sent by a network device is received, in which the scheduling instruction is configured to schedule transmission of a plurality of transport blocks.

Please refer to the relevant descriptions in the previous embodiments, which will not be repeated in this embodiment.

At step 602, in response to the plurality of transport blocks including only second transport blocks with HARQ feedback disabled, HARQ feedback corresponding to any of the second transport blocks is not sent to the network device.

The network device transmits information through the second transport blocks. After receiving the information carried by the network device through the second transport blocks, the terminal device decodes the information carried by each second transport block separately to determine whether the information carried by each second transport block has been correctly received. For each second transport block, regardless of whether the terminal device correctly receives the information carried by each second transport block, the terminal device does not send any HARQ feedback corresponding to any of the second transport blocks to the network device. Therefore, the network device can perform subsequent transmissions without waiting for HARQ feedback for the second transport block, thereby reducing the transmission delay caused by waiting to a certain extent.

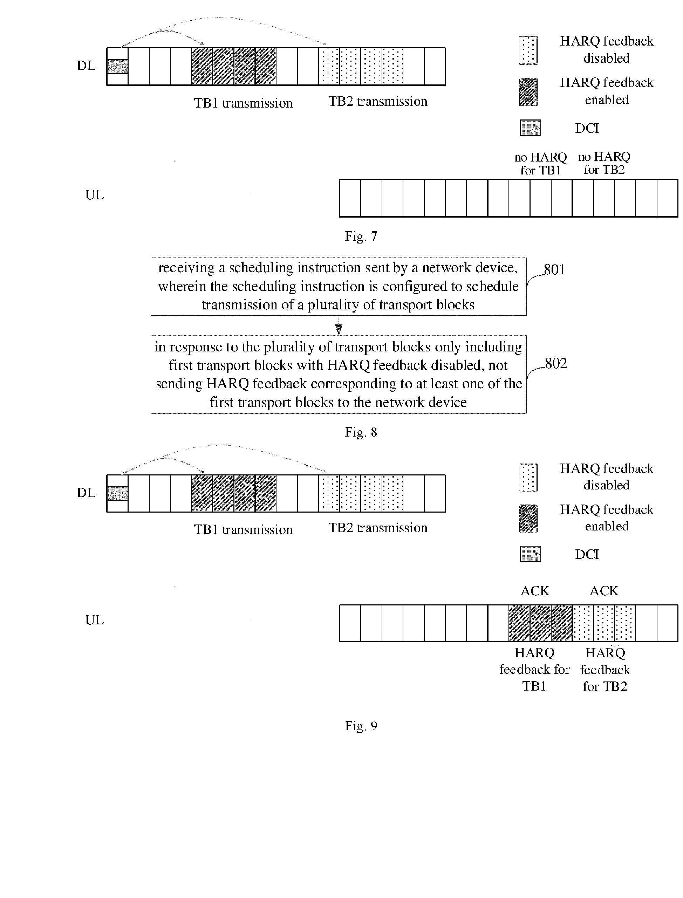

As shown in Fig. 7, the schematic diagram depicts the terminal device receiving TB1 transmission and TB2 transmission based on the downlink channel (DL) when two transport blocks are scheduled with the same scheduling instruction. The transport block TB1 used for TB1 transmission and the transport block TB2 used for TB2 transmission are both second transport blocks with HARQ feedback disabled. As shown in Fig. 7, the terminal device can not send any HARQ feedback in the uplink channel (UL), that is, not send HARQ feedback for transport block TB1, and not send HARQ feedback for transport block TB2. Correspondingly, after transmitting the transport block TB1 and the transport block TB2 based on the downlink channel, the network device can proceed with subsequent transmissions without waiting to receive HARQ feedback sent by the terminal devices for transport blocks TB1 and TB2, thereby reducing the transmission delay caused by waiting to a certain extent.

By implementing this embodiment of the present disclosure, if the terminal device receives information carried by a plurality of transport blocks scheduled by the same scheduling instruction and the plurality of transport blocks include only the second transport blocks with HARQ feedback disabled, it will not send any HARQ feedback corresponding to any of the second transport blocks to the network device. Correspondingly, the network device can proceed with subsequent transmissions without waiting for the HARQ feedback corresponding to all transport blocks in a plurality of transport blocks to be received. In this way, the network device can avoid waiting for all HARQ feedback corresponding to a plurality of transport blocks to be received before proceeding with subsequent transmissions, which is beneficial for reducing the transmission delay caused by waiting for HARQ feedback to a certain extent.

Please refer to Fig. 8, which is a schematic flowchart of another HARQ feedback method provided in an embodiment of the present disclosure. As shown in Fig. 8, the method is performed by a terminal device, and the method may include, but is not limited to, the following steps.

At step 801, a scheduling instruction sent by a network device is received, in which the scheduling instruction is configured to schedule transmission of a plurality of transport blocks.

Please refer to the relevant descriptions in the previous embodiments, which will not be repeated in this embodiment.

At step 802, in response to the plurality of transport blocks including only first transport blocks with HARQ feedback enabled, HARQ feedback corresponding to at least one of the first transport blocks is sent to the network device.

The network device transmits information through the first transport blocks. After receiving the information carried by the network device through the first transport blocks, the terminal device decodes the information carried by each first transport block to determine whether the information carried by each first transport block has been correctly received.

For each first transport block, the terminal device can send only the HARQ feedback corresponding to one of the plurality of first transport blocks to the network device, or it can also send the corresponding HARQ feedback for each first transport block to the network device.

As a possible implementation, the terminal device only sends HARQ feedback corresponding to one of the first transport blocks to the network device. The HARQ information of the HARQ feedback sent by the terminal device can be determined based on whether the information carried by a plurality of first transport blocks has been correctly received. For example, in the case where the information carried by a plurality of first transport blocks has been correctly received, the HARQ feedback information of the HARQ feedback sent by the terminal device to the network can be ACK; in the case where at least one of the information carried by a plurality of first transport blocks is not received correctly, the HARQ feedback information of the HARQ feedback sent by the terminal device to the network can be NACK.

As another possible implementation, the terminal device sends HARQ feedback corresponding to each first transport block in the plurality of first transport blocks to the network device, and the HARQ information of the HARQ feedback sent by the terminal device can be determined based on whether the information carried by the corresponding first transport block has been correctly received.

As shown in Fig. 9, the schematic diagram depicts the terminal device receiving TB1 transmission and TB2 transmission based on the downlink channel (DL) when two transport blocks are scheduled with the same scheduling instruction. The transport block TB1 used for TB1 transmission and the transport block TB2 used for TB2 transmission are both the first transport blocks with HARQ feedback enabled. The terminal device can send HARQ feedback for at least one transport block in the uplink channel (UL), for example, as shown in Fig. 9, HARQ feedback can be sent for both transport blocks TB1 and TB2. Correspondingly, after transmitting the transport block TB1 and the transport block TB2 based on the downlink channel, the network device can wait to receive HARQ feedback for at least one of the transport blocks TB1 and TB2, and can proceed with subsequent transmission without waiting to receive HARQ feedback sent by the terminal device for the remaining of the transport blocks TB1 and TB2, thereby reducing the transmission delay caused by waiting to a certain extent.

It should be noted that those skilled in the art can understand that the network device can also wait to receive HARQ feedback for all transport blocks TB1 and TB2 before proceeding with subsequent transmissions, which is not limited in this embodiment.

By implementing this embodiment of the present disclosure, after receiving information carried by a plurality of transport blocks scheduled by the same scheduling instruction, if only the first transport blocks with HARQ feedback enabled are included in the plurality of transport blocks, the terminal device sends HARQ feedback corresponding to at least one of the first transport blocks to the network device. Correspondingly, after receiving HARQ feedback corresponding to the at least one transport block in the plurality of transport blocks, the network device can proceed with subsequent transmissions. In this way, it is possible to avoid the network device having to wait for all HARQ feedback corresponding to a plurality of transport blocks to be received before proceeding with subsequent transmissions, which is beneficial for reducing the transmission delay caused by waiting for HARQ feedback to a certain extent.

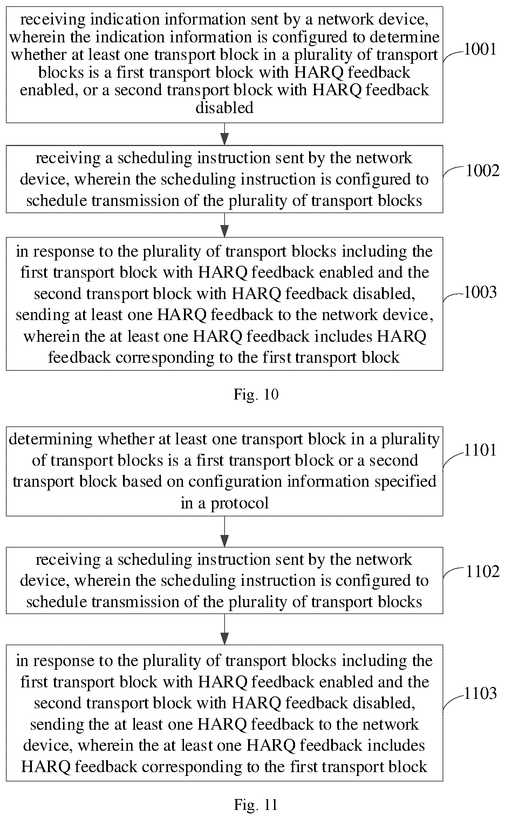

Please refer to Fig. 10, which is a schematic flowchart of another HARQ feedback method provided in an embodiment of the present disclosure. As shown in Fig. 10, the method is performed by a terminal device, and the method may include, but is not limited to, the following steps.

At step 1001, indication information sent by a network device is received, in which the indication information is configured to determine whether the at least one transport block in the plurality of transport blocks is the first transport block with HARQ feedback enabled, or the second transport block with HARQ feedback disabled.

In embodiments of the present disclosure, in a possible implementation, it is possible to indicate whether each transport block enables HARQ feedback or not. In another possible implementation, the transport block can be defaulted to enable HARQ feedback, and the network device indicates the transport block with HARQ feedback disabled. In yet another possible implementation, the transport block can be defaulted to be a transport block with HARQ feedback disabled, and the network device indicates the transport block with HARQ feedback enabled. The network device sends the indication information based on high-layer signaling such as RRC, or based on physical layer signaling such as MEC CE, or based on DCI signaling, which is not limited in this embodiment.

As a possible implementation, this indication information is configured to indicate a plurality of available transport blocks between the network devices and the terminal device. The signaling configured to send the indication information also carries an indication field, which can be newly added or reused from an existing indication field. The terminal device determines whether at least one transport block among a plurality of transport blocks is the first transport block with HARQ feedback enabled or the second transport block with HARQ feedback disabled based on the indication field.

The network device uses the indication information to enable the terminal device to determine the available a plurality of transport blocks between the network device and the terminal device, and whether the plurality of transport blocks are the first transport blocks or the second transport blocks, so that the network device can select at least some transport blocks from the available a plurality of transport blocks for scheduling through the scheduling instruction.

Technicians in this field may know that the indication information configured to indicate whether a plurality of transport blocks are the first transport block or the second transport block can be sent through a plurality of signaling, for example, each signaling indicates whether at least one transport block is the first transport block or the second transport block. The indication information can also be sent through a signaling. For example, when the indication information is sent through a signaling, it indicates whether each of the plurality of transport blocks is the first transport block or the second transport block respectively.

At step 1002, a scheduling instruction sent by the network device is received, in which the scheduling instruction is configured to schedule transmission of a plurality of transport blocks.

At step 1003, in response to the plurality of transport blocks including a first transport block with HARQ feedback enabled and a second transport block with HARQ feedback disabled, at least one HARQ feedback is sent to the network device, in which the at least one HARQ feedback includes HARQ feedback corresponding to the first transport block.

Steps 1002 and 1003 are described in detail in the previous embodiments, and will not be repeated in this embodiment.

By implementing this embodiment of the present disclosure, after receiving information carried by a plurality of transport blocks scheduled by the same scheduling instruction, the terminal device can send corresponding HARQ feedback to the network device only for the first transport blocks with HARQ feedback enabled among the plurality of transport blocks. In this way, the network device can avoid waiting for all HARQ feedback corresponding to a plurality of transport blocks to be received before proceeding with subsequent transmissions, which is beneficial for reducing the transmission delay caused by waiting for HARQ feedback to a certain extent.

Please refer to Fig. 11, which is a schematic flowchart of another HARQ feedback method provided in an embodiment of the present disclosure. As shown in Fig. 10, the method is performed by a terminal device, and the method may include, but is not limited to, the following steps.

At step 1101, it is determined whether at least one transport block in the plurality of transport blocks is the first transport block or the second transport block based on configuration information specified in a protocol.

As a possible implementation, the configuration information specified in the protocol specifies a plurality of transport blocks available between the network device and the terminal device, and whether the plurality of transport blocks are the first or second transport blocks, in order for the network device to select at least some transport blocks from the specified available a plurality of transport blocks for scheduling through the scheduling instruction.

At step 1102, a scheduling instruction sent by the network device is received, in which the scheduling instruction is configured to schedule transmission of a plurality of transport blocks.

At step 1103, in response to the plurality of transport blocks including a first transport block with HARQ feedback enabled and a second transport block with HARQ feedback disabled, at least one HARQ feedback is sent to the network device, in which the at least one HARQ feedback includes HARQ feedback corresponding to the first transport block.

Steps 1102 and 1103 are described in detail in the previous embodiments, and will not be repeated in this embodiment.

By implementing this embodiment of the present disclosure, after receiving information carried by a plurality of transport blocks scheduled by the same scheduling instruction, the terminal device can send corresponding HARQ feedback to the network device only for the first transport blocks with HARQ feedback enabled among the plurality of transport blocks. In this way, the network device can avoid waiting for all HARQ feedback corresponding to a plurality of transport blocks to be received before proceeding with subsequent transmissions, which is beneficial for reducing the transmission delay caused by waiting for HARQ feedback to a certain extent.

Technicians in this field can understand that the aforementioned a plurality of embodiments executed by the terminal device can be implemented independently or combined in any way, which is not limited in the embodiments of the present disclosure.

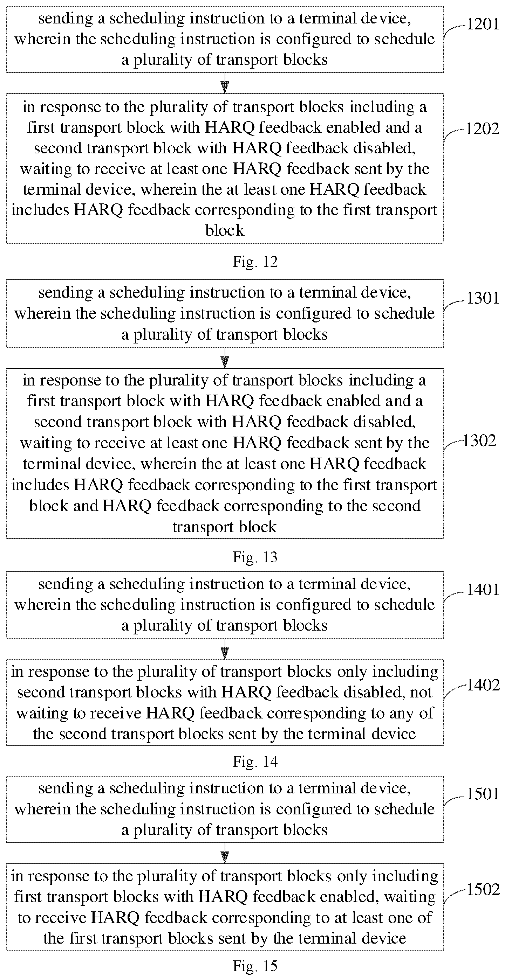

Please refer to Fig. 12, which is a schematic flowchart of another HARQ feedback method provided in an embodiment of the present disclosure. As shown in Fig. 12, the method is performed by a network device and may include, but is not limited to, the following steps.

At step 1201, a scheduling instruction is sent to a terminal device, in which the scheduling instruction is configured to schedule a plurality of transport blocks.

The network device can send the scheduling instruction to the terminal device. The scheduling instruction is configured to schedule the transmission of a plurality of transport blocks. It can be understood that since the network device can schedule the transmission of a plurality of transport blocks in the scheduling instruction, the terminal device can correspondingly receive the information carried by the plurality of transport blocks on the plurality of transmission resources scheduled by the scheduling instruction, and then after the terminal device receives the information carried by the plurality of transport blocks, the terminal device can determine whether HARQ feedback is required for these a plurality of transport blocks, and/or determine the HARQ information of the HARQ feedback.

It should be noted that the network device can send the scheduling instruction based on a DCI signaling, or send the scheduling instruction based on a high-layer signaling such as RRC, or send the scheduling instruction based on a physical layer signaling such as MEC CE, which is not limited in this embodiment.

At step 1202, in response to the plurality of transport blocks including a first transport block with HARQ feedback enabled and a second transport block with HARQ feedback disabled, the network device waits to receive at least one HARQ feedback sent by the terminal device, in which the at least one HARQ feedback includes HARQ feedback corresponding to the first transport block.

The network device transmits information through the first transport block and the second transport block. After the terminal device receives the information carried by the network device through the first and second transport blocks, it decodes the information carried by the first and second transport blocks respectively to determine whether the information carried by the first and second transport blocks has been correctly received, and sends HARQ feedback to the network device, so that the network device can continue subsequent transmission after receiving the HARQ feedback sent by the terminal device.

For the first transport block, the terminal device can send the HARQ feedback information corresponding to the first transport block to the network device based on whether the information carried by the first transport block and the information carried by the second transport block have been correctly received. Specifically, if the terminal device correctly receives the information carried by the first transport block, HARQ information of the HARQ feedback corresponding to the first transport block is ACK; if the terminal device does not correctly receive the information carried by the first transport block, HARQ information of the HARQ feedback corresponding to the first transport block is NACK. Correspondingly, the network device can wait to receive the HARQ feedback information corresponding to the first transport block sent by the terminal device, and determine whether the terminal device has correctly received the information carried by the first transport block based on whether the HARQ information is ACK or NACK.

For the second transport block, as it is a second transport block with HARQ feedback disabled, regardless of whether the terminal device correctly receives the information carried by the second transport block, the terminal device does not need to send HARQ feedback corresponding to the second transport block to the network device. Correspondingly, the network device does not need to wait to receive the HARQ feedback corresponding to the second transport block sent by the terminal device. That is, in step 1202, in response to a plurality of transport blocks including a first transport block with HARQ feedback enabled and a second transport block with HARQ feedback disabled, waiting to receive at least one HARQ feedback sent by the terminal device, in which at least one HARQ feedback includes the HARQ feedback corresponding to the first transport block and does not include the HARQ feedback corresponding to the second transport block.

By implementing this embodiment of the present disclosure, the network device can wait to receive the corresponding HARQ feedback sent by the terminal device, for only the first transport blocks with HARQ feedback enabled among the plurality of transport blocks after sending the information carried by the plurality of transport blocks scheduled by the scheduling instruction to the terminal device. In this way, the network device can avoid waiting for all HARQ feedback corresponding to a plurality of transport blocks to be received before proceeding with subsequent transmissions, which is beneficial for reducing the transmission delay caused by waiting for HARQ feedback to a certain extent.

Please refer to Fig. 13, which is a schematic flowchart of another HARQ feedback method provided in an embodiment of the present disclosure. As shown in Fig. 13, the method is performed by a network device and may include, but is not limited to, the following steps.

At step 1301, a scheduling instruction is sent to a terminal device, in which the scheduling instruction is configured to schedule a plurality of transport blocks.

Please refer to the relevant descriptions in the previous embodiments, which will not be repeated in this embodiment.

At step 1302, in response to the plurality of transport blocks including a first transport block with HARQ feedback enabled and a second transport block with HARQ feedback disabled, the network device waits to receive at least one HARQ feedback sent by the terminal device, in which the at least one HARQ feedback includes HARQ feedback corresponding to the first transport block and HARQ feedback corresponding to the second transport block.

The network device transmits information through the first transport block and the second transport block. After the terminal device receives the information carried by the network device through the first and second transport blocks, it decodes the information carried by the first and second transport blocks respectively to determine whether the information carried by the first and second transport blocks has been correctly received, and sends HARQ feedback to the network device, so that the network device can proceed with subsequent transmissions after receiving the HARQ feedback sent by the terminal device.

For the first transport block, the terminal device can send the HARQ feedback information corresponding to the first transport block to the network device based on whether the information carried by the first transport block and the information carried by the second transport block have been correctly received. Specifically, if the terminal device correctly receives the information carried by the first transport block, HARQ information of the HARQ feedback corresponding to the first transport block is ACK; if the terminal device does not correctly receive the information carried by the first transport block, HARQ information of the HARQ feedback corresponding to the first transport block is NACK. Correspondingly, the network device can wait to receive the HARQ feedback information corresponding to the first transport block sent by the terminal device, and determine whether the terminal device has correctly received the information carried by the first transport block based on whether the HARQ information is ACK or NACK.

For the second transport block, as the first possible implementation, the HARQ feedback corresponding to the second transport block contains HARQ information configured to determine whether the information carried by the second transport block has been successfully received. If the terminal device correctly receives the information carried by the second transport block, the HARQ feedback corresponding to the second transport block contains HARQ information as ACK; if the terminal device does not correctly receive the information carried by the second transport block, the HARQ feedback corresponding to the second transport block contains HARQ information as NACK. Correspondingly, the network device determines whether the terminal device has correctly received the information carried by the second transport block based on the HARQ information of the HARQ feedback corresponding to the second transport block sent by the terminal device, which is ACK or NACK. It should be noted that the network device can wait for HARQ feedback for the second transport block, or can proceed with subsequent transmissions without waiting for HARQ feedback for the second transport block, thereby reducing the transmission delay caused by waiting to a certain extent.

For the second transport block, as a second possible implementation, the HARQ information in the HARQ feedback corresponding to the second transport block is the default value. That is to say, regardless of whether the terminal device correctly receives the information carried by the second transport block, the HARQ feedback corresponding to the second transport block contains the same default value of HARQ information, which can be exemplified by ACK or NACK. Correspondingly, the network device cannot determine whether the terminal device has correctly received the information carried by the second transport block based on the HARQ feedback corresponding to the second transport block sent by the terminal device. Therefore, the network device can proceed with subsequent transmissions without waiting for HARQ feedback for the second transport block, thereby reducing the transmission delay caused by waiting to a certain extent.

By implementing this embodiment of the present disclosure, after the network device sends the information carried by the plurality of transport blocks scheduled by the scheduling instruction to the terminal device, the network device can wait to receive the corresponding HARQ feedback sent by the terminal device, for only the first transport blocks with HARQ feedback enabled among the plurality of transport blocks. The network device can wait for HARQ feedback for the second transport block, or can proceed with subsequent transmissions without waiting for HARQ feedback for the second transport block. In this way, the network device can avoid waiting for all HARQ feedback corresponding to a plurality of transport blocks to be received before proceeding with subsequent transmissions, which is beneficial for reducing the transmission delay caused by waiting for HARQ feedback to a certain extent.

Please refer to Fig. 14, which is a schematic flowchart of another HARQ feedback method provided in an embodiment of the present disclosure. As shown in Fig. 14, the method is performed by a network device and may include, but is not limited to, the following steps.

At step 1401, a scheduling instruction is sent to a terminal device, in which the scheduling instruction is configured to schedule a plurality of transport blocks.

Please refer to the relevant descriptions in the previous embodiments, which will not be repeated in this embodiment.

At step 1402, in response to the plurality of transport blocks including only second transport blocks with HARQ feedback disabled, the network device does not wait for the terminal device to send HARQ feedback corresponding to any of the second transport blocks.

The network device transmits information through the second transport blocks. After receiving the information carried by the network device through the second transport blocks, the terminal device will decode the information carried by each second transport block separately to determine whether the information carried by each second transport block has been correctly received. For each second transport block, regardless of whether the terminal device correctly receives the information carried by each second transport block, the terminal device does not send any HARQ feedback corresponding to any of the second transport blocks to the network device. Therefore, the network device can perform subsequent transmissions without waiting for HARQ feedback for the second transport block, thereby reducing the transmission delay caused by waiting to a certain extent.

By implementing this embodiment of the present disclosure, after the network device sends the information carried by the plurality of transport blocks scheduled by the scheduling instruction to the terminal device, if the plurality of transport blocks only include the second transport blocks with HARQ feedback disabled, there is no need to wait to receive the HARQ feedback corresponding to any of the second transport blocks sent by the terminal device. That is to say, the network device does not need to wait for the HARQ feedback corresponding to all transport blocks in a plurality of transport blocks to be received before proceeding with subsequent transmissions. In this way, the network device can avoid waiting for all HARQ feedback corresponding to a plurality of transport blocks to be received before proceeding with subsequent transmissions, which is beneficial for reducing the transmission delay caused by waiting for HARQ feedback to a certain extent.

Please refer to Fig. 15, which is a schematic flowchart of another HARQ feedback method provided in an embodiment of the present disclosure. As shown in Fig. 15, the method is performed by a network device and may include, but is not limited to, the following steps.

At step 1501, a scheduling instruction is sent to a terminal device, in which the scheduling instruction is configured to schedule a plurality of transport blocks.

Please refer to the relevant descriptions in the previous embodiments, which will not be repeated in this embodiment.

At step 1502, in response to the plurality of transport blocks including only first transport blocks with HARQ feedback enabled, the network device waits to receive HARQ feedback corresponding to at least one of the first transport blocks sent by the terminal device.

The network device transmits information through the first transport blocks. After receiving the information carried by the network device through the first transport blocks, the terminal device will decode the information carried by each first transport block separately to determine whether the information carried by each first transport block is correctly received, and send HARQ feedback corresponding to at least one of the first transport blocks to the network device, so that the network device can continue the subsequent transmission after receiving the HARQ feedback corresponding to the at least one transport block in the plurality of transport blocks.

For each first transport block, the terminal device may only send HARQ feedback corresponding to one of the first transport blocks to the network device, or may also send corresponding HARQ feedback to the network device for each first transport block.

As a possible implementation, the terminal device only sends HARQ feedback corresponding to one of the first transport blocks to the network device, so that the network device can wait to receive the HARQ feedback corresponding to the one first transport block sent by the terminal device. Optionally, the HARQ information of the HARQ feedback sent by the terminal device can be determined based on whether the information carried by a plurality of first transport blocks has been correctly received. For example, in the case where the information carried by a plurality of first transport blocks has been correctly received, the HARQ information of the HARQ feedback sent by the terminal device to the network can be ACK; in the case where the information carried by at least one of the plurality of first transport blocks is not received correctly, the HARQ information of the HARQ feedback sent by the terminal device to the network can be NACK.

As another possible implementation, the terminal device sends HARQ feedback for each first transport block in a plurality of first transport blocks to the network device, so that the network device can wait to receive the HARQ feedback for each first transport block sent by the terminal device. Optionally, the HARQ information of HARQ feedback sent by the terminal device may be determined based on whether the information carried by the corresponding first transport block has been correctly received.

By implementing this embodiment of the present disclosure, the network device waits to receive the HARQ feedback corresponding to the at least one of the first transport blocks sent by the terminal device if only the first transport blocks with HARQ feedback enabled are included in the plurality of transport blocks, after sending the information carried by the plurality of transport blocks scheduled by the scheduling instruction to the terminal device. That is to say, after receiving HARQ feedback corresponding to the at least one transport block in the plurality of transport blocks, the network device can proceed with subsequent transmissions. In this way, it is possible to avoid the network device having to wait for all HARQ feedback corresponding to a plurality of transport blocks to be received before proceeding with subsequent transmissions, which is beneficial for reducing the transmission delay caused by waiting for HARQ feedback to a certain extent.

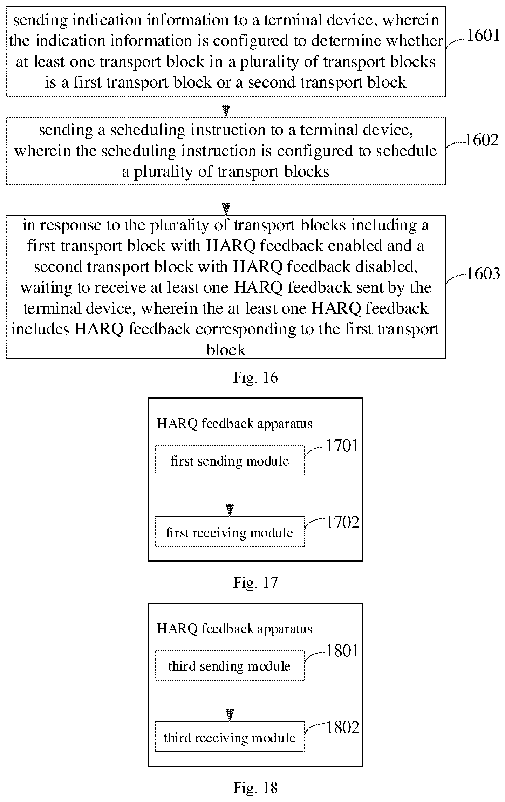

Please refer to Fig. 16, which is a schematic flowchart of another HARQ feedback method provided in an embodiment of the present disclosure. As shown in Fig. 16, the method is performed by a network device, and the method may include, but is not limited to, the following steps.

At step 1601, indication information is sent to a terminal device, in which the indication information is configured to determine whether the at least one transport block in the plurality of transport blocks is the first transport block, or the second transport block.

In embodiments of the present disclosure, in a possible implementation, it is possible to indicate whether each transport block enables HARQ feedback or not. The network device sends the indication information based on high-layer signaling such as RRC, or based on physical layer signaling such as MEC CE, or based on DCI signaling, which is not limited in this embodiment.

As a possible implementation, this indication information is configured to indicate a plurality of available transport blocks between the network devices and the terminal device. The signaling configured to send the indication information also carries an indication field, which can be newly added or reused from an existing indication field. The terminal device determines whether at least one transport block among a plurality of transport blocks is the first transport block with HARQ feedback enabled or the second transport block with HARQ feedback disabled based on the indication field.

The network device uses the indication information to enable the terminal device to determine the available a plurality of transport blocks between the network device and the terminal device, and whether the plurality of transport blocks are the first transport blocks or the second transport blocks, so that the network device can select at least some transport blocks from the available a plurality of transport blocks for scheduling through the scheduling instruction.

Technicians in this field may know that the indication information configured to indicate whether a plurality of transport blocks are the first transport blocks or the second transport blocks can be sent through a plurality of signaling, for example, each signaling indicates whether at least one transport block is the first transport block or the second transport block. The indication information can also be sent through a signaling. For example, when the indication information is sent through a signaling, it indicates whether each of the plurality of transport blocks is the first transport block or the second transport block respectively.

At step 1602, a scheduling instruction is sent to the terminal device, in which the scheduling instruction is configured to schedule a plurality of transport blocks.

At step 1603, in response to the plurality of transport blocks including a first transport block with HARQ feedback enabled and a second transport block with HARQ feedback disabled, the network device waits to receive at least one HARQ feedback sent by the terminal device, in which the at least one HARQ feedback includes HARQ feedback corresponding to the first transport block.

Steps 1602 and 1603 are described in detail in the previous embodiments, and will not be repeated in this embodiment.

By implementing this embodiment of the present disclosure, the network device can wait to receive the corresponding HARQ feedback sent by the terminal device, for only the first transport blocks with HARQ feedback enabled among the plurality of transport blocks after sending the information carried by the plurality of transport blocks scheduled by the scheduling instruction to the terminal device. In this way, the network device can avoid waiting for all HARQ feedback corresponding to the plurality of transport blocks to be received before proceeding with subsequent transmissions, which is beneficial for reducing the transmission delay caused by waiting for HARQ feedback to a certain extent.

Technicians in this field can understand that the aforementioned a plurality of embodiments executed by the network device can be implemented independently or combined in any way, which is not limited in embodiments of the present disclosure.

In the above embodiments provided in this disclosure, the methods provided in this disclosure are introduced from the perspectives of terminal device and network device, respectively. In order to achieve the various functions in the methods provided in embodiments of the present disclosure, the terminal device and network device may include hardware structures and software modules, which can be implemented in the form of hardware structures, software modules, or a combination of hardware structures and software modules. One of the above functions can be executed in the form of hardware structure, software module, or a combination of hardware structure and software module.

Please refer to Fig. 17, which is a schematic diagram of a HARQ feedback apparatus provided in an embodiment of the present disclosure. The device can be a terminal device, a device installed in the terminal device, or a device that can be matched and used with the terminal device. As shown in Fig. 17, the HARQ feedback apparatus may include:
a first receiving module 1701, configured to receive a scheduling instruction sent by a network device, in which the scheduling instruction is configured to schedule a plurality of transport blocks;
a first sending module 1702, configured to send at least one HARQ feedback to the network device, in response to the plurality of transport blocks including a first transport block with HARQ feedback enabled and a second transport block with HARQ feedback disabled,
in which the at least one HARQ feedback includes HARQ feedback corresponding to the first transport block.

In an implementation, the at least one HARQ feedback further includes:
HARQ feedback corresponding to the second transport block.

In an implementation, HARQ information contained in the HARQ feedback corresponding to the second transport block is one of:
HARQ information configured to determine whether information carried by the second transport block is successfully received;
HARQ information with a set value.

In an implementation, the device further includes:
a second receiving module, configured to receive indication information sent by the network device;
in which the indication information is configured to determine whether the at least one transport block in the plurality of transport blocks is the first transport block or the second transport block.

In an implementation, the device further includes:
a determining module, configured to determine the at least one transport block in the plurality of transport blocks as the first transport block or the second transport block based on configuration information specified in a protocol.

In an implementation, the device further includes:
a first processing module, configured to not send HARQ feedback corresponding to any of the second transport blocks to the network device, in response to the plurality of transport blocks only including second transport blocks with HARQ feedback disabled.

In an implementation, the device further includes:
a second sending module, configured to send HARQ feedback corresponding to at least one of the first transport blocks to the network device, in response to the plurality of transport blocks only including first transport blocks with HARQ feedback enabled.

It should be noted that the HARQ feedback apparatus provided in embodiments of the present disclosure can achieve all the method steps implemented in the HARQ feedback method embodiments shown in Figures 2 to 11, and can achieve the same technical effects. Therefore, specific descriptions of the same parts and beneficial effects as the method embodiments will not be repeated here in this embodiment.

Please refer to Fig. 18, which is a block diagram of another HARQ feedback apparatus provided in an embodiment of the present disclosure. The device can be a network device, a device installed in the network device, or a device that can be matched with the network device. As shown in Fig. 18, the HARQ feedback apparatus may include:
a third sending module 1801, configured to send a scheduling instruction to a terminal device, in which the scheduling instruction is configured to schedule a plurality of transport blocks;
a third receiving module 1802, configured to wait to receive at least one HARQ feedback sent by the terminal device, in response to the plurality of transport blocks including a first transport block with HARQ feedback enabled and a second transport block with HARQ feedback disabled,
in which the at least one HARQ feedback includes HARQ feedback corresponding to the first transport block.

In an implementation, the at least one HARQ feedback further includes:
HARQ feedback corresponding to the second transport block.

In an implementation, HARQ information contained in the HARQ feedback corresponding to the second transport block is one of:
HARQ information configured to determine whether information carried by the second transport block is successfully received;
HARQ information with a set value.

In an implementation, the device further includes:
a fourth sending module, configured to send indication information to the terminal device;
in which the indication information is configured to determine whether the at least one transport block in the plurality of transport blocks is the first transport block or the second transport block.

In an implementation, the device further includes:
a second processing module, configured to not wait to receive HARQ feedback corresponding to any of the second transport blocks sent by the terminal device, in response to the plurality of transport blocks only including second transport blocks with HARQ feedback disabled.

In an implementation, the device further includes:
a third processing module, configured to wait to receive HARQ feedback corresponding to at least one of the first transport blocks sent by the terminal device, in response to the plurality of transport blocks only including first transport blocks with HARQ feedback enabled.

It should be noted that the HARQ feedback apparatus provided in this embodiment of the present disclosure can achieve all the method steps implemented in the HARQ feedback method embodiments shown in Figures 12 to 16, and can achieve the same technical effects. Therefore, the same parts and beneficial effects as the method embodiments in this embodiment will not be specifically described here.

In order to implement the above embodiments, the present disclosure also proposes a communication device including a processor, which can execute the methods shown in the embodiments of Figures 2 to 11 when the processor calls the computer program in the memory.

In order to implement the above embodiments, the present disclosure also proposes a communication device including a processor, which can execute the methods shown in the embodiments of Figures 12 to 16 when the processor calls the computer program in the memory.

In order to implement the above embodiments, the present disclosure also proposes a communication device including a processor and a memory, in which the memory stores a computer program; the processor executes the computer program stored in the memory to enable the communication device to perform the methods shown in the embodiments of Figures 2 to 11.

In order to implement the above embodiments, the present disclosure also proposes a communication device including a processor and a memory, in which the memory stores a computer program; the processor executes the computer program stored in the memory to enable the communication device to perform the methods shown in the embodiments of Figures 12 to 16.

In order to implement the above embodiments, the present disclosure also proposes a communication device including a processor and an interface circuit, in which the interface circuit is configured to receive code instructions and transmit them to the processor, and the processor is configured to run the code instructions to cause the device to perform the methods shown in the embodiments of Figures 2 to 11.

In order to implement the above embodiments, the present disclosure also proposes a communication device including a processor and an interface circuit, in which the interface circuit is configured to receive code instructions and transmit them to the processor, and the processor is configured to run the code instructions to cause the device to perform the methods shown in the embodiments of Figures 12 to 16.

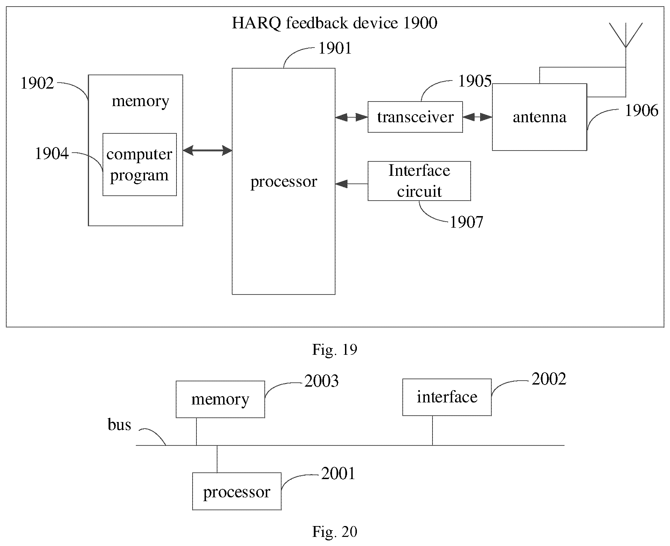

Please refer to Fig. 19, which is a block diagram of a HARQ feedback device 1900 provided in an embodiment of the present disclosure. The HARQ feedback device may be a network device, or may be a terminal device, or may be a chip, a chip system, or a processor that supports the network device to implement the above methods, or may be a chip, a chip system, or a processor that supports the terminal device to implement the above methods. This device can be configured to implement the methods described in the above method embodiments, which can be referred to in the description of the above method embodiments.

The HARQ feedback device 1900 may include one or more processors 1901. The processor 1901 may be a general-purpose processor or a dedicated processor, etc. For example, it may be a baseband processor or a central processing unit. The baseband processor can be configured to process communication protocols and communication data, while the central processor can be configured to control communication devices (such as base stations, baseband chips, terminal devices, terminal device chips, DU or CU, etc.), execute computer programs, and process data from computer programs.

Optionally, the HARQ feedback device 1900 may also include one or more memories 1902, on which computer programs 1904 may be stored. The processor 1901 executes the computer programs 1904 to enable the HARQ feedback device 1900 to perform the methods described in the above method embodiments. Optionally, the memory 1902 may also store data. The HARQ feedback device 1900 and the memory 1902 can be set separately or integrated together.

Optionally, the HARQ feedback device 1900 may also include a transceiver 1905 and an antenna 1906. The transceiver 1905 can be referred to as a transceiver unit, transceiver machine, or transceiver circuit, etc., configured to achieve transceiver functions. The transceiver 1905 can include a receiver and a transmitter, where the receiver can be referred to as a receiver unit or receiving circuit, etc., configured to achieve the receiving function; the transmitter can be referred to as a transmitter unit or a transmission circuit, etc., configured to implement the transmission function.

Optionally, the HARQ feedback device 1900 may also include one or more interface circuits 1907. The interface circuit 1907 is configured to receive code instructions and transmit them to the processor 1901. The processor 1901 executes the code instructions to cause the HARQ feedback device 1900 to perform the method described in the above method embodiments.

In one implementation, the processor 1901 may include a transceiver for implementing receiving and transmitting functions. For example, the transceiver can be a transceiver circuit, or an interface, or an interface circuit. The transceiver circuit, interface, or interface circuit configured to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In one implementation, the processor 1901 may store a computer program 1904 that runs on the processor 1904 and enables the HARQ feedback device 1900 to perform the method described in the above method embodiments. The computer program 1904 may be fixed in the processor 1901, in which case the processor 1901 may be implemented by hardware.

In one implementation, the HARQ feedback device 1900 may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The HARQ feedback device 1900 described in the above embodiments may be a network device or a terminal device, but the scope of the HARQ feedback device 1900 described in this disclosure is not limited to this, and the structure of the HARQ feedback device 1900 may not be limited by Figs. 17-18. The HARQ feedback device 1900 may be a standalone device or a part of a larger device. For example, the HARQ feedback device 1900 may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal device, intelligent terminal device, cellular phone, wireless device, handheld device, mobile unit, vehicle mounted device, network device, cloud device, artificial intelligence device, etc;
(6) Others and so on.

For the HARQ feedback device 1900 that can be a chip or chip system, reference can be made to the block diagram of the chip shown in Fig. 20. The chip shown in Fig. 20 includes processors 2001 and interfaces 2002. The number of processors 2001 can be one or more, and the number of interfaces 2002 can be a plurality of.

For the case where the chip is configured to implement the functions of the terminal device in the embodiments of the present disclosure:
the interface 2002 is configured to receive code instructions and transmit the code instructions to the processor;
the processor 2001 is configured to run the code instructions to implement the method shown in Fig. 2-Fig. 11.

For the case where the chip is configured to implement the functions of the network device in the embodiments of the present disclosure:
the interface 2002 is configured to receive code instructions and transmit the code instructions to the processor;
the processor 2001 is configured to run the code instructions to implement the method shown in Fig. 12-Fig. 16.

Optionally, the chip also includes a memory 2003 for storing necessary computer programs and data.

Technicians in this field can also understand that various illustrative logical blocks and steps listed in the embodiments of the present disclosure can be implemented by electronic hardware, computer software, or a combination of both. Whether such functionality is implemented by hardware or software depends on the specific application and the design requirements of the entire system. Technicians in this field can use various methods to implement the described functions for each specific application, but such implementation should not be understood as exceeding the scope of protection of the disclosed embodiments.

The present disclosure also provides a readable storage medium storing instructions that, when executed by a computer, implement the functions of any of the method embodiments described above.

The present disclosure also provides a computer program product that, when executed by a computer, implements the functions of any of the method embodiments described above.

**In** the above embodiments, it can be fully or partially implemented by software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "a plurality of" \can be two, three, four, or more, without limitation in this disclosure. **In** embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

The correspondence relationships shown in each table in this disclosure can be configured or predefined. The values of the information in each table are only examples and can be configured as other values, which are not limited by this disclosure. When configuring the correspondence between information and various parameters, it is not necessarily required to configure all the correspondence relationships shown in each table. For example, in the table disclosed herein, the correspondence relationships shown in certain rows may not be configured. For another example, appropriate deformation adjustments can be made based on the above table, such as splitting, merging, and so on. The titles in the above tables indicate that the names of the parameters can also be other names that the communication device can understand, and the values or representations of the parameters can also be other values or representations that the communication device can understand. The above tables can also be implemented using other data structures, such as arrays, queues, containers, stacks, linear tables, pointers, linked lists, trees, graphs, structures, classes, heaps, hash tables, etc.

The predefined in this disclosure can be understood as defined, defined in adventure, stored, pre-stored, pre-negotiated, pre-configured, solidified, or pre-fired.

Those skilled in the art will recognize that the units and algorithm steps described in the embodiments of the present disclosure can be implemented using electronic hardware, or a combination of computer software and electronic hardware. Whether these functions are executed in hardware or software depends on the specific application and design constraints of the technical solution. Professional technicians can use different methods to achieve the described functionality for each specific application, but such implementation should not be considered beyond the scope of this disclosure.

Technicians in the relevant field can clearly understand that, for the convenience and conciseness of description, the specific working process of the system, device, and unit described above can refer to the corresponding process in the aforementioned method embodiments, which will not be repeated here.

The above is only a specific implementation of the present disclosure, but the scope of protection of the present disclosure is not limited to this. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

## Claims

1. A hybrid automatic repeat request (HARQ) feedback method, performed by a terminal device, comprising:
receiving a scheduling instruction sent by a network device, wherein the scheduling instruction is configured to schedule a plurality of transport blocks; and
in response to the plurality of transport blocks comprising a first transport block with HARQ feedback enabled and a second transport block with HARQ feedback disabled, sending at least one HARQ feedback to the network device, wherein the at least one HARQ feedback comprises HARQ feedback corresponding to the first transport block.

2. The method of claim 1, wherein the at least one HARQ feedback further comprises:
HARQ feedback corresponding to the second transport block.

3. The method of claim 2, wherein HARQ information contained in the HARQ feedback corresponding to the second transport block is one of:
HARQ information configured to determine whether information carried by the second transport block is successfully received; or
HARQ information with a set value.

4. The method of claim 1, further comprising:
receiving indication information sent by the network device;
wherein the indication information is configured to determine whether the at least one transport block in the plurality of transport blocks is the first transport block or the second transport block.

5. The method of claim 1, further comprising:
determining the at least one transport block in the plurality of transport blocks as the first transport block or the second transport block based on configuration information specified in a protocol.

6. The method of any of claims 1-5, further comprising:
in response to the plurality of transport blocks only comprising second transport blocks with HARQ feedback disabled, not sending HARQ feedback corresponding to any of the second transport blocks to the network device.

7. The method of any of claims 1-5, further comprising:
in response to the plurality of transport blocks only comprising first transport blocks with HARQ feedback enabled, sending HARQ feedback corresponding to at least one of the first transport blocks to the network device.

8. A HARQ feedback method, performed by a network device, comprising:
sending a scheduling instruction to a terminal device, wherein the scheduling instruction is configured to schedule a plurality of transport blocks; and
in response to the plurality of transport blocks comprising a first transport block with HARQ feedback enabled and a second transport block with HARQ feedback disabled, waiting to receive at least one HARQ feedback sent by the terminal device, wherein the at least one HARQ feedback comprises HARQ feedback corresponding to the first transport block.

9. The method of claim 8, wherein the at least one HARQ feedback further comprises:
HARQ feedback corresponding to the second transport block.

10. The method of claim 9, wherein HARQ information contained in the HARQ feedback corresponding to the second transport block is one of:
HARQ information configured to determine whether information carried by the second transport block is successfully received; or
HARQ information with a set value.

11. The method of claim 8, further comprising:
sending indication information to the terminal device;
wherein the indication information is configured to determine whether the at least one transport block in the plurality of transport blocks is the first transport block or the second transport block.

12. The method of any of claims 8-11, further comprising:
in response to the plurality of transport blocks only comprising second transport blocks with HARQ feedback disabled, not waiting to receive HARQ feedback corresponding to any of the second transport blocks sent by the terminal device.

13. The method of any of claims 8-11, further comprising:
in response to the plurality of transport blocks only comprising first transport blocks with HARQ feedback enabled, waiting to receive HARQ feedback corresponding to at least one of the first transport blocks sent by the terminal device.

14. A HARQ feedback apparatus, comprising:
a first receiving module, configured to receive a scheduling instruction sent by a network device, wherein the scheduling instruction is configured to schedule a plurality of transport blocks; and
a first sending module, configured to send at least one HARQ feedback to the network device, in response to the plurality of transport blocks comprising a first transport block with HARQ feedback enabled and a second transport block with HARQ feedback disabled, wherein the at least one HARQ feedback comprises HARQ feedback corresponding to the first transport block.

15. A HARQ feedback apparatus, comprising:
a third sending module, configured to send a scheduling instruction to a terminal device, wherein the scheduling instruction is configured to schedule a plurality of transport blocks; and
a third receiving module, configured to wait to receive at least one HARQ feedback sent by the terminal device, in response to the plurality of transport blocks comprising a first transport block with HARQ feedback enabled and a second transport block with HARQ feedback disabled, wherein the at least one HARQ feedback comprises HARQ feedback corresponding to the first transport block.

16. A communication device, comprising a processor and a memory, wherein the memory stores a computer program, the processor is configured to execute the computer program stored in the memory to cause the communication device to perform the method according to any one of claims 1 to 7.

17. A communication device, comprising a processor and a memory, wherein the memory stores a computer program, the processor is configured to execute the computer program stored in the memory to cause the communication device to perform the method according to any one of claims 8 to 13.

18. A communication device, comprising a processor and an interface circuit, wherein
the interface circuit is configured to receive code instructions and transmit the code instructions to the processor; and
the processor is configured to run the code instructions to execute the method according to any one of claims 1 to 7.

19. A communication device, comprising a processor and an interface circuit, wherein
the interface circuit is configured to receive code instructions and transmit the code instructions to the processor; and
the processor is configured to run the code instructions to execute the method according to any one of claims 8 to 13.

20. A computer readable storage medium, stored with instructions which, when executed, cause the method of any of claims 1-7 to be implemented.

21. A computer readable storage medium, stored with instructions which, when executed, cause the method of any of claims 8-13 to be implemented.
